# EUROPEAN PATENT SPECIFICATION

(11) **EP 2 386 598 B1**
(45) Date of publication and mention of the grant of the patent: **13.02.2013**
(21) Application number: 10162737.0
(22) Date of filing: 12.05.2010
(51) Int. Cl.: C08K 5/098, C08K 5/103, C08K 5/00

(54) **Oxygen scavenging compositions**
Sauerstofffangende Zusammensetzungen
Compositions désoxygénantes

(43) Date of publication of application: 16.11.2011
(73) Proprietor: Holland Colours N. V., 7323 RW Apeldoorn (NL)
(72) Inventor: Roelofs, Jules Caspar Albert Anton, 7323 RW Apeldoorn (NL); Stoop, Jeroen, 7323 RW Apeldoorn (NL)
(74) Representative: Hatzmann, Martin

(56) References cited:
- US-A- 5 021 515
- US-B2- 6 831 121

## Description

The invention is directed to oxygen scavenging additives, more in particular to additives for improving the oxygen barrier properties of polyester compositions, especially those polyester compositions that are suitable for use for packaging foodstuff and beverages.

Polyester thermoplastic resins are commonly used to manufacture packaging materials. Processed under the right conditions articles are produced with high strength and excellent gas barrier properties. Polymers used in making film, thermoformed trays, or blow molded containers, are primarily based on polyester due to its physical properties. Suitable polyesters are PET, PEN, PBT, PLA, PC and combinations thereof, and more in particular can be homopolymers such as polyethylene terephthalate (PET), polyethylene naphthalate (PEN), or copolymers of either or both. For blow molded containers, polyethylene terephthalate isophthalate copolyester is particularly useful. To improve shelf-life and flavor retention of products such as foods, beverages, and medicines the barrier protection provided by PET is often supplemented with additional layers of packaging material or with the addition of oxygen scavengers.

Extensive work has been done on incorporating oxygen scavengers in polymers for production of plastic containers. Several commercial systems for PET packaging utilize a metal-catalyzed oxidisable organic moiety. The oxygen scavenging material or blend may comprise one layer (monolayer), or may comprise one or more layers of a multilayer structure.

Typical oxygen scavenging compounds are oxidisable organic molecules containing allylic positions such as polybutadiene based polymers, or polyethylene/cyclohexene copolymers, or containing benzylic positions such as m- xylylamine-based polyamides, or mixtures of these. The use of oxidisable organic polymers by themselves results in a very slow oxidative process, but such polymers lack the desired physical properties of PET and are very costly compared with PET. The incorporation of oxidation catalyst into the oxidisable polymer dramatically increases the oxygen scavenging activity.

With respect to the oxidisable organic materials mentioned earlier, poly(m- xylylene adipamide) (known commercially as MXD6) is widely known. Additionally, the prior art discloses that the oxidisable organic moiety need a transition metal catalysts to make it actively scavenge oxygen. The most common transition catalyst described by the prior art is a cobalt salt. The use of a transition metal catalyst to promote oxygen scavenging in polyamide multilayer containers, and blends with PET, has been disclosed in the following patents, for example. US Pat. Nos. 5,021,515, 5,639,815 and 5,955,527 to Cochran et al.. The said patents disclose the use of a cobalt salt as the preferred transition metal catalyst and poly(m-xylylene adipamide) (MXD6) as the preferred oxidisable organic material.

US-A 2009/0311457 mentions the modification of the polyester chain by including oxidisable pendant groups, containing double carbon-carbon bonds. It is also known to include monomeric or oligomeric compounds in the polyester, which compounds are liable to be oxidized under the conditions of storage , thereby scavenging the oxygen. Examples thereof are the use of 2-butene-1,4-diol as monomeric compound (US-A 2008/0171169), octenyl succinic anhydride (US-A 2009/311457), unsaturated fatty acids like olic acid, linoleic acid, and hydroxy terminated polybutadiene as oligomeric compound (US-A 6,083,585).

It is known that the use of blends of polyester and oxidisable organic materials in the plastic container or bottling industry, or any industry were transparent, high clarity articles are desired can be problematic, because, for example, upon orienting or stretching an article containing a blend of polyester and polyamide, the article loses much of its clarity and transparency, i. e. , becomes visually cloudy or hazy. Furthermore, adding more oxidisable organic material also increases costs significantly.

Further, it is important to improve the barrier properties of polyester, to make the material even more suitable for packaging oxygen sensitive materials.

As the amount of oxidisable organic material used in the polyester/oxidisable organic material blend increases, sometimes the haze value also increases, as well as costs. Efforts have focused on reducing the gas permeability of the article by addition of oxygen scavengers, while, at the same time, trying to reduce the amount of haze produced upon orientation of the article.

Thus, there is a need for an additive increasing the oxygen barrier performance, thereby either reducing the gas permeability, and/or lowering the amount of oxidisable organic material in the blend causing haze and higher costs.

Surprisingly, we have found that certain trimethylolpropane esters can be used to enhance the catalytic performance of the above-described oxidation reactions. This means that these esters act as an enhancer for the scavenging activity, and accordingly as an enhancer of the barrier properties of the ultimate material.

Accordingly the invention is in a first embodiment directed to a barrier performance increasing or oxygen scavenging additive system, wherein the additive system comprises a combination of an oxidisable organic compound, a transition metal catalyst and fatty acid ester of trimethylolpropane, wherein the fatty acid is a C6 to C18 fatty acid having a linear or branched chain.

In a further embodiment the invention is directed to the use of said esters for improving the barrier properties of polyesters, which contain an oxygen scavenging system based on an oxidisable organic material and a transition metal catalyst.

As indicated, the invention resides therein that the additional presence of the said esters synergistically improves the barrier properties of the polyester/barrier system. The way this functions is not clear, but one possible explanation is, that the ester enhances the catalytic activity of the catalyst-oxidisable organic material system.

The esters are preferably tri-esters. The fatty acid component may be linear or branched and is selected from the C6 to C18 fatty acid moieties. Preferred are heptanoate, caprate, caprylate, isostearate and laurate. Most preferred are trimethylolpropane tri-esters, such as laurate, caprate and caprylate, optionally in combination of two or more thereof or mixed esters.

In this respect it is to be noted that the fatty acids are natural products, which has the consequence, as is well known, that they consist of a mixture of various chain lengths, with the emphasis on the indicated value, i.e. a C8 fatty acid will accordingly also contain, apart from the majority of C8, also amounts of C6 and C10, or even some C4 or C12. It is thus to be understood that the chain length indicated for the fatty acid moiety is to be understood in the accepted sense in the art, namely that of a mixture of chain lengths distributed around the indicated value, with the chain length indicated being present as the largest fraction.

The above-described esters have a low vapor pressure and therefore vaporize much less readily. For this reason, they do not plate out on tooling and moulds during the formation of polyester articles. The low vapor pressure and high thermal stability also enable the esters to be incorporated in polyester resin and retain their function through solid-state polymerization and subsequent drying.

In general, the barrier performance properties of an oxygen scavenging material can be expressed in terms of the barrier improvement factor (BIF). The oxygen ingress of bottles with oxygen scavenging material is compared to oxygen ingress of virgin PET bottles. Bottles design is the same. The ratio yield the BIF factor. For oxygen scavenging materials, BIF values are in the order of 10 -50, preferably 10-30. To calculate the effect of the barrier performance increasing additives as described in this patent application, the BIF value can also be utilized. By comparison of the barrier performance of the oxygen scavenging materials with and without the above barrier performance increasing additives an alternative BIF* value can be calculated. Thus, if the BIF value of an oxygen scavenging material compared with virgin PET is 20 and addition of the barrier performance increasing additive yields a BIF value of 40 as compared to virgin PET, the BIF* value will be 2.

In the present invention at least a BIF* value of 1-10 is preferred, at an added amount of 1 wt.% of the ester in the final material. The oxidisable material can be any suitable material that is oxidized by migrating oxygen in the polyester in the presence of the oxidation catalyst. Generally these materials contain carbon-carbon double bonds like 2-butene-1,4-diol or m-xylylene moieties. In a preferred embodiment the material is a polymer, and more preferred poly(m-xylylene adipamide) (MXD6) or a co-polyester containing polybutadiene segments in the polymer backbone It is also possible, as discussed above, that the oxidisable material is incorporated in the polyester chain, either in the main chain or as pendant group.

A broad variety of metallic and organic compounds can catalyze the oxygen scavenging effect of the organic materials, and an appropriate compound may be selected based on any of cost, compatibility with the oxygen scavenging polymer, compatibility with other polymers in a blend, and compatibility with other layers in a multi-layered package. Suitable oxidation catalysts include transition metals and the like.

Examples of suitable catalysts include transition metals such as cobalt, iron, nickel, aluminum, ruthenium, rhodium, palladium, antimony, osmium, iridium, platinum, copper, manganese, and zinc, as well as oxides, salts or complexes of these metals. For example, cobalt II salts of short chain acids such as acetic acid or terephthalic acid, or long chain acids such as neodecanoic, stearic, 2-ethyl hexanoic, or octenyl succinic acid may be used. Salts of inorganic acids may also be used. For example, antimony III chloride, antimony V chloride, and cobalt chloride may be used. Preferred catalysts include salts of cobalt and long chain acids such as, for example, cobalt acetate, cobalt neodecanoate, cobalt stearate, and cobalt octoate.

The oxidation catalyst should preferably be present in an amount sufficient to catalyze the oxygen scavenging ability of the oxygen scavenging material. The amount used will depend partially upon the catalyst chosen. However, in general, when using transition metal catalysts or complexes, the amount of transition metal catalyst or complexes present may suitably be greater than about 10 ppm by weight, preferably greater than about 20 ppm by weight, and more preferably greater than about 50 ppm by weight of the total composition. The amount of transition metal catalyst or complexes present may suitably be less than about 10,000 ppm by weight, preferably less than about 300 ppm by weight, and more preferably less than about 150ppm by weight of the total composition.

The composition of the oxygen scavenging material, i.e. the amount of oxidisable material, catalyst and ester, may vary strongly, dependent on the actual use, and materials. The amount of oxidisable material in the additive system is preferably between 50 and 95 wt%. The amount of catalyst in the said additive system is preferably between 0.1 and 1 wt.%. The amount of ester in the said material is preferably between 4 and 49 wt.%, more preferably between 8 and 20 wt.%.

The composition of the final polyester material i.e.. the amount of oxidisable material, catalyst and ester, may vary strongly, dependent on the actual use, and materials. The amount of oxidisable material in the said polyester material will be between 0,01 and 20%, more preferably 0,1-10%. The amount of transition metal catalyst or complexes present may suitably be greater than about 10 ppm by weight, preferably greater than about 20 ppm by weight, and more preferably greater than about 50 ppm by weight of the total composition. The amount of transition metal catalyst or complexes present may suitably be less than about 10,000 ppm by weight, preferably less than about 300 ppm by weight, and more preferably less than about 150 ppm by weight of the total composition. The amount of ester will be between 0,2 and 2 wt.% more preferably, between 0,2 and 1 wt.%. All amounts are calculated on the basis of the final polyester composition, including the oxygen scavenging additive system.

It is to be noted that the invention is directed to an oxygen scavenging additive system, which means that the additives are not necessarily present in one concentrate, but also in the form of a kit, or of an instruction to supply the components separately during the production or processing of the polyester material, either totally separate, or in a combination of two of them together and one separately.

The polyester can be combined with the oxygen scavenging additive system at different stages of polyester processing. Because of the thermal stability and low volatility of the ester of the present invention, the point at which they are added to polyesters are not particularly critical. As the various components of the system may be added separately from each other, it is also possible to supply them at different stages of the processing.

In one embodiment, the polyester can be combined with the oxygen scavenging additive system by preparing a polyester melt and combining the compounds with the polyester melt. The oxygen scavenging additive system can be added to the polyester prior to the melt-processing or after the melt-processing. In one embodiment, the polyester melt is not solidified prior to forming a polyester article.

It can also be added as pure additive or incorporated into a masterbatch which is added at the point of remelting the polyester resin immediately prior to injection molding.

Also possible is to produce a barrier resin, using co-extrusion of a polyester resin and organic oxidisable polymer, both processed at different temperatures, where the oxygen scavenging additive system can be added to either polymer streams.

Depending on the intended end use of the polyester packaging material, optional additives may be incorporated into the polyester material. In a preferred embodiment these additives are combined with the additive system of the oxygen scavenging polymer composition. Suitable additives include heat stabilizers, antioxidants, colorants, crystallization agents, blowing agents, fillers, accelerants, and the like. Advantageously these additives may be included into the said ester component of the system.

This invention also encompasses compositions for use in making polyester articles comprising polyester and the above described oxygen scavenging additive system, polyester articles made with the oxygen scavenging additive system described above, and a corresponding method for making polyester articles.

Furthermore, this invention encompasses containers and container preforms made with the above described composition and packaged beverages comprising a beverage disposed in such a container.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

The invention is now elucidated on the basis of the following examples.

### EXAMPLE 1

PET Cleartuf 8006 resin from Mossi & Ghisolfi was mixed with Cobalt neodecanoate (Shepherd) and processed on a laboratory extruder (APV 19mm twin screw) and temperature profile between 270 and 240 °C at 300 rpm to produce dark blue coloured PET with a cobalt (calculated as metal) concentration of 0.5 wt%. One wt. part of this blend was mixed with 2 parts of MXD6 polyamide S6007 (Mitsubishi Gas Chemical).

Preforms and bottles were produced with this blend in an amount of 3 wt.% in Invista T94N PET resin (IV=0.84 dl/g) to produce 25 gr preforms with 28 mm PCO neck finish on an Arburg Allrounder 320 (extruder temperature profile, hot runner temperatures were set at 285°C), equipped with a Piovan T200 dryer and DB-60 control unit (PET was dried to a dew point of -45°C). Preforms were blown into 0.5 litre bottles on a Corpoplast LB01.

In a further test, in addition to the 3% of the blend, trimethylolpropane trilaurate was dosed at 0.4%.

Bottles were tested on barrier performance. Oxygen concentrations were determined with Oxysense equipment using fluorescence. Bottles were stored in a climate chamber for a prolonged period at 21°C and 50% relative humidity.

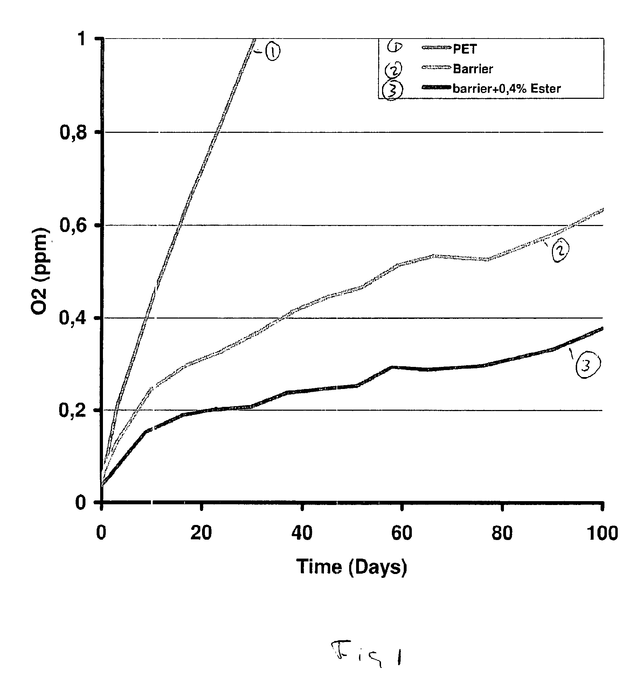

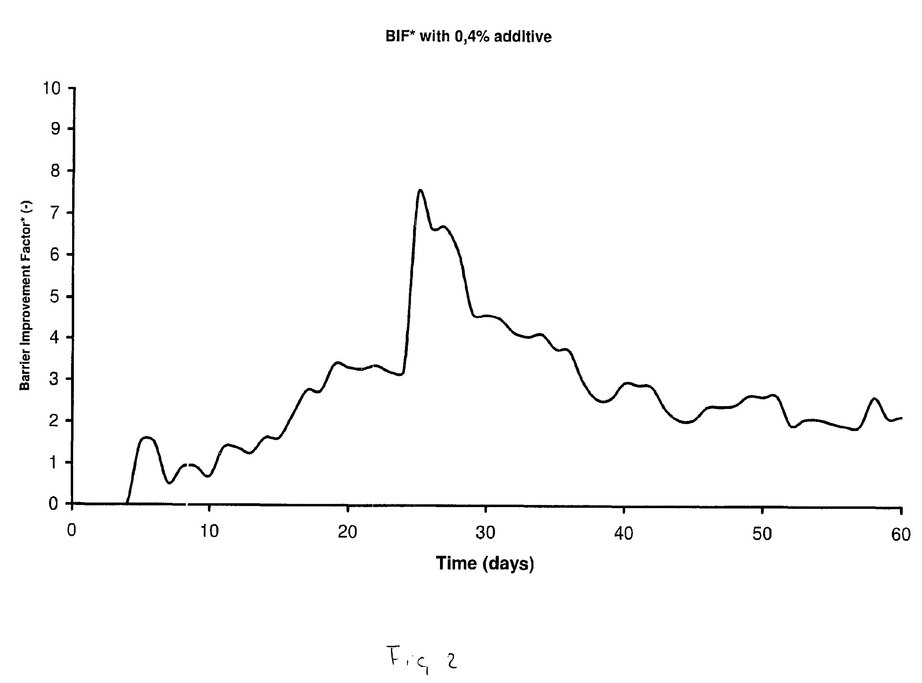

Results show the effect of the additive on the barrier performance (Figure 1). Cleary, an improvement in scavenging performance can be observed when the ester component of the additive is also present. The BIF* value at any given time can be seen in Figure 2. An average a BIF* value of 2 was obtained. This means a more economical use of raw materials can be made.

### EXAMPLE 2:

Preforms and bottles were produced using the same PET/MXD6 blend as in example 1. This was dosed at 6 wt.% to Invista T94N PET resin (IV=0.84 dl/g) to produce 25 gr preforms with 28 mm PCO neck finish on an Arburg Allrounder 320 (extruder temperature profile, hot runner temperatures were set at 285°C), equipped with a Piovan T200 dryer and DB-60 control unit (PET was dried to a dew point of -45°C). Preforms were blown into 0.5 litre bottles on a Corpoplast LB01.

In a further test, trimethylolpropane trilaurate was additionally dosed at 0.4 wt.%.

Bottles were tested on barrier performance. Oxygen concentrations were determined with Oxysense equipment using fluorescence. Bottles were stored in a climate chamber for a prolonged period at 21°C and 50% relative humidity.

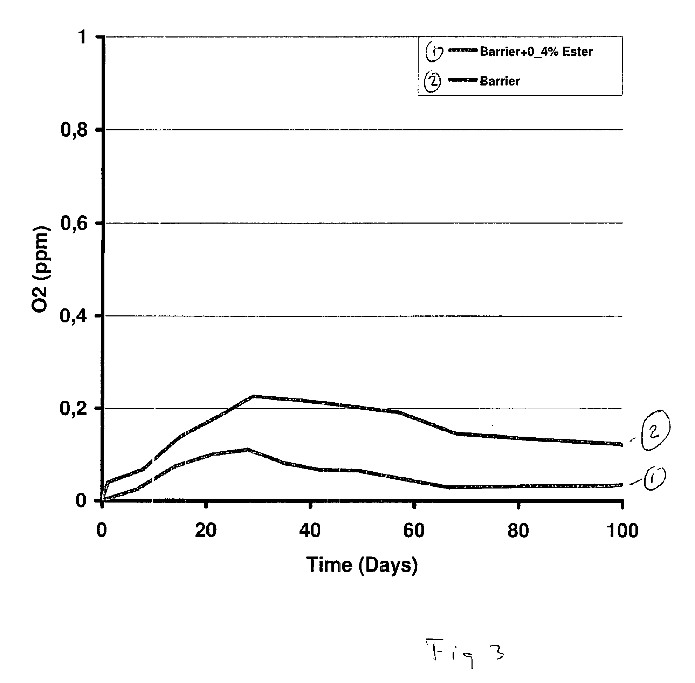

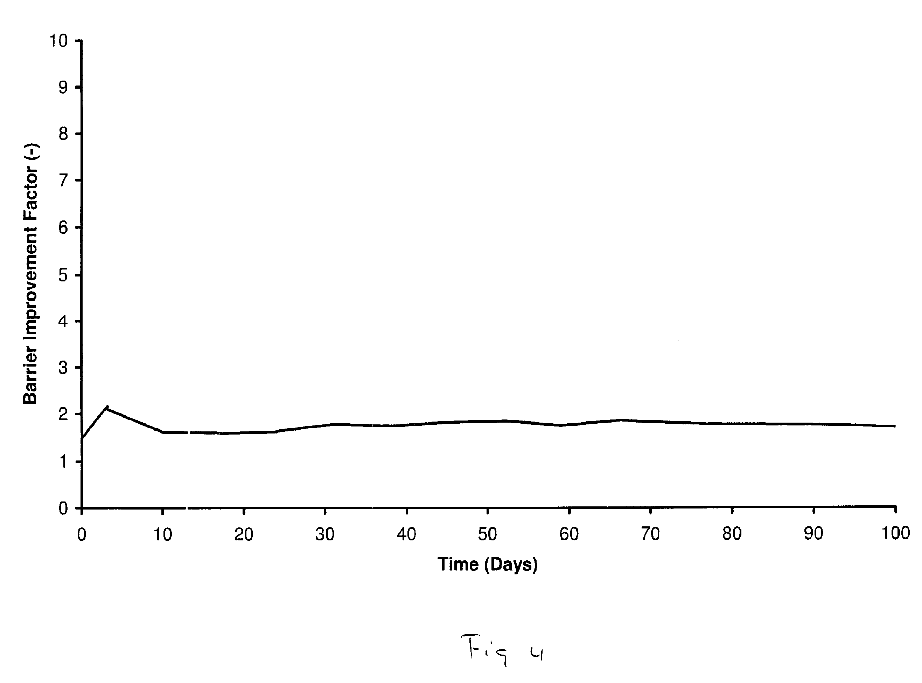

Results from Figure 3 show the effect of the additive on the barrier performance. Cleary, an improvement in scavenging performance can be observed when additive is present. Results show the effect of the additive on the barrier performance. Cleary, an improvement in scavenging performance can be observed when the additional ester additive is present. The BIF* value at any given time can be seen in Figure 4. An average BIF* value of 2-8 was obtained. This means a more economical use of raw materials can be made.

## Claims

1. Oxygen scavenging additive system for polymers, said additive system comprising an oxidisable organic material, a transition metal catalyst and a fatty acid ester of trimethylolpropane, wherein the fatty acid is a C6 to C18 fatty acid having a linear or branched chain.

2. Oxygen scavenging additive system according to claim 1, comprising 50 to 95 wt.% of the said organic material, 0.1 to 1 wt% of the said catalyst and 4 to 49 wt.% of the said fatty acid ester.

3. Oxygen scavenging additive system according to claim 1 or 2, wherein the said oxidisable material is selected from the group of polymeric, oligomeric, monomeric and other oxidisable materials, preferably from having meta- xylylene or polybutadiene moieties.

4. Oxygen scavenging additive system according to claim 1 - 3, wherein the said transition metal catalyst is selected from the group of cobalt neodecanoate, cobalt oxide, cobalt octoate, cobalt stearate, cobalt propionate, cobalt naphthenate, cobalt octadecenoate.

5. Oxygen scavenging additive system according to claim 1 - 4, wherein the said fatty acid moiety is selected from the group of capric acid, caprylic acid and laurate.

6. Use of a fatty acid ester of trimethylolpropane, wherein the fatty acid is a C6 to C18 fatty acid having a linear or branched chain as a an enhancer of the barrier performance of a barrier system based on a transition metal catalyst and an oxidisable organic material in oxygen scavenging.

7. Use according to claim 6, wherein the said polymer is a polyester for packaging, preferably PET.

8. Polyester composition having barrier properties, said composition comprising at least one polyester, an oxidisable organic material, a transition metal catalyst and a fatty acid ester of trimethylolpropane, wherein the fatty acid is a C6 to C18 fatty acid having a linear or branched chain.

9. Polyester composition according to claim 8, comprising 80 to 99 wt.% of the said at least one polyester, 0.01 to 20 wt.% of the said organic material, 50 ppm to 300 ppm of the said catalyst and 0.01 to 2 wt.% of the said fatty acid ester.

10. Polyester composition according to claim 8 or 9, said polyester having a composition according to claim 1-5 incorporated therein.

11. Polyester composition according to claim 8-10, wherein the polyester has been selected form the group of PET, PEN, PBT, PLA, PC and combinations thereof.

12. Containers and container preforms prepared from a polyester composition of claim 8 to 11.

13. Packaged foodstuff, such as beverages packaged in a container according to claim 12.

## Patentansprüche

1. Sauerstofffangendes Additivsystem für Polymere, wobei das Additivsystem einen oxidierbaren organischen Stoff, einen Übergangsmetallkatalysator und einen Fettsäureester von Trimethylolpropan umfasst, wobei die Fettsäure eine C6- bis C18-Fettsäure mit einer linearen oder verzweigten Kette ist.

2. Sauerstofffangendes Additivsystem nach Anspruch 1, umfassend 50 bis 95 Gewichtsprozent des organischen Stoffs, 0,1 bis 1 Gewichtsprozent des Katalysators und 4 bis 49 Gewichtsprozent des Fettsäureesters.

3. Sauerstofffangendes Additivsystem nach Anspruch 1 oder 2, wobei der oxidierbare Stoff aus der Gruppe polymerer, oligomerer, monomerer und anderer oxidierbarer Stoffe, die vorzugsweise Metaxylen- oder Polybutadienreste aufweisen, ausgewählt ist.

4. Sauerstofffangendes Additivsystem nach Anspruch 1 - 3, wobei der Übergangsmetallkatalysator aus der Gruppe von Kobaltneodecanoat, Kobaltoxid, Kobaltoctat, Kobaltstearat, Kobaltpropionat, Kobaltnaphthenat, Kobaltoctadecenoat ausgewählt ist.

5. Sauerstofffangendes Additivsystem nach Anspruch 1 - 4, wobei der Fettsäurerest aus der Gruppe von Caprinsäure, Caprylsäure und Laureat ausgewählt ist.

6. Verwendung eines Fettsäureesters von Trimethylolpropan, wobei die Fettsäure eine C6- bis C18-Fettsäure mit einer linearen oder verzweigten Kette als Verstärker der Barriereleistung eines Barrieresystems basierend auf einem Übergangsmetallkatalysator und einem oxidierbaren organischen Stoff beim Sauerstofffangen ist.

7. Verwendung nach Anspruch 6, wobei das Polymer ein Polyester zum Verpacken, vorzugsweise PET, ist.

8. Polyesterzusammensetzung mit Barriereeigenschaften, wobei die Zusammensetzung mindestens einen Polyester, einen oxidierbaren organischen Stoff, einen Übergangsmetallkatalysator und einen Fettsäureester von Trimethylolpropan umfasst, wobei die Fettsäure eine C6- bis C18-Fettsäure mit einer linearen oder verzweigten Kette ist.

9. Polyesterzusammensetzung nach Anspruch 8, umfassend 80 bis 99 Gewichtsprozent des mindestens einen Polyesters, 0,01 bis 20 Gewichtsprozent des organischen Stoffs, 50 ppm bis 300 ppm des Katalysators und 0,01 bis 2 Gewichtsprozent des Fettsäureesters.

10. Polyesterzusammensetzung nach Anspruch 8 oder 9, wobei der Polyester eine Zusammensetzung nach Anspruch 1-5 enthält.

11. Polyesterzusammensetzung nach Anspruch 8-10, wobei der Polyester aus der Gruppe von PET, PEN, PBT, PLA, PC und Kombinationen von diesen ausgewählt wurde.

12. Behälter und Behälter-Vorformen, hergestellt aus einer Polyesterzusammensetzung nach Anspruch 8 bis 11.

13. Verpacktes Nahrungsmittel wie beispielsweise Getränke, verpackt in einen Behälter nach Anspruch 12.

## Revendications

1. Système additif de piégeage de l'oxygène pour polymères, ledit système additif comprenant une matière organique oxydable, un catalyseur à métal de transition et un ester d'acide gras et de triméthylolpropane, où l'acide gras est un acide gras C6 à C18 ayant une chaîne linéaire ou ramifiée.

2. Système additif de piégeage de l'oxygène selon la revendication 1, comprenant 50 à 95 % en poids de ladite matière organique, 0,1 à 1 % en poids dudit catalyseur et 4 à 49 % en poids dudit ester d'acide gras.

3. Système additif de piégeage de l'oxygène selon la revendication 1 ou 2, où ladite matière oxydable est choisie dans le groupe des matières polymères, oligomères, monomères et autres matières oxydables, de préférence ayant des groupements méta-xylylène ou polybutadiène.

4. Système additif de piégeage de l'oxygène selon les revendications 1-3, où ledit catalyseur à métal de transition est choisi dans le groupe du néodécanoate de cobalt, oxyde de cobalt, octoate de cobalt, stéarate de cobalt, propionate de cobalt, naphténate de cobalt, octa-décénoate de cobalt.

5. Système additif de piégeage de l'oxygène selon les revendications 1-4, où ledit groupement acide gras est choisi dans le groupe de l'acide caprique, acide caprylique et laurate.

6. Utilisation d'un ester d'acide gras et de triméthylolpropane, où l'acide gras est un acide gras C6 à C18 ayant une chaîne linéaire ou ramifiée comme amplificateur des performances de barrière d'un système de barrière basé sur un catalyseur à métal de transition et une matière organique oxydable dans le piégeage de l'oxygène.

7. Utilisation selon la revendication 6, où ledit polymère est un polyester pour l'emballage, de préférence le PET.

8. Composition de polyester ayant des propriétés de barrière, ladite composition comprenant au moins un polyester, une matière organique oxydable, un catalyseur à métal de transition et un ester d'acide gras et de triméthylolpropane, où l'acide gras est un acide gras C6 à C18 ayant une chaîne linéaire ou ramifiée.

9. Composition de polyester selon la revendication 8, comprenant 80 à 99 % en poids dudit au moins un polyester, 0,01 à 20 % en poids de ladite matière organique, 50 ppm à 300 ppm dudit catalyseur et 0,01 à 2 % en poids dudit ester d'acide gras.

10. Composition de polyester selon la revendication 8 ou 9, ledit polyester ayant une composition selon les revendications 1-5 incorporée à l'intérieur.

11. Composition de polyester selon les revendications 8-10, où le polyester a été choisi dans le groupe de PET, PEN, PBT, PLA, PC et leurs combinaisons.

12. Récipients et préformes de récipients préparés à partir d'une composition de polyester des revendications 8 à 11.

13. Aliment emballé, tel que boissons emballées dans un récipient selon la revendication 12.
